# EUROPEAN PATENT APPLICATION

(11) **EP 0 567 418 A2**
(43) Date of publication of application: **27.10.1993**
(21) Application number: 93480019.4
(22) Date of filing: 09.03.1993
(51) Int. Cl.: G06F 3/033

(54) **Method and apparatus for managing a windowing environment of a user interface in an information processing system**

(30) Priority: 20.04.1992 US 871150
(71) Applicant: INTERNATIONAL BUSINESS MACHINES CORPORATION, Armonk, N.Y. 10504 (US)
(72) Inventor: Haddon, Marla A., Smyrna, GA 30080 (US); Mann, Teresa L., Smyrna, GA 30082 (US)
(74) Representative: de Pena, Alain

(57) **Abstract**

A method and apparatus for reordering windows and window objects with primary application in a multiple window environment in an information processing system. The windows or window objects may be reordered sequentially or according to some hierarchical relationship among the windows. Each window in the multi-window display contains a system menu icon which may be selected for providing a choice to reorder the windows on the display according to either sequence or hierarchy. A user selects the system menu icon in any one of the opened windows on the display. One or more window counters is incremented each time a window or window object is opened on the display. A window counter value is then assigned to each window so that it can be readily reordered. Reordered windows and window objects are typically displayed in a cascaded configuration on the display screen.

## Description

The present invention relates in general to computer system user interfaces and, more particularly, to managing multiple windows in a user interface.

Present day computer systems commonly use graphical user interfaces (GUI) to enhance the usability of such computer systems by a user. Such graphical user interfaces make it easier for the user to interact with the computer than would be the case with a purely textual user interface. Graphical user interfaces have become even more important as multiple applications run simultaneously on a computer.

One aspect of such computer systems utilizing graphical user interfaces that has greatly increased the power of the systems is the use of viewports or windows. Such windows are typically rectangular areas on a computer display which are simultaneously active and permit the simultaneous display of portions of computer applications in the windows. Most current computer systems which operate in a windowing environment permit multiple applications to be simultaneously output active while only the outer most window is input active. However, as processes become more powerful and display systems are enhanced, it will be possible for all the windows on a display screen to be both input active and output active at the same time.

In a multi-windowed display, the window on which an end user is currently working is usually called the active window. When this window becomes active, the priority of the window displays change and the active window moves on top of or in front of all the other windows in the display. Thus, all of the active window is visible while the remaining windows are either partially hidden or even entirely hidden under the active window. Normally, to select a desired win- dowfrom among the plurality of windows on a display and move it to the front thus making it the desired active window, a pointing device, such as a mouse, is used. The user positions a display pointing image, such as a pointer, to a frameline or an icon pattern on the desired window. By pressing a button on the mouse, the window is selected and becomes the active window. The mouse can also be used to move various windows around the display screen as well as selecting another of the windows on the display to be the active window.

Oftentimes, the display in a computer system having a plurality of windows is referred to as a desktop with each window representing a piece of paper lying on the desktop. Just as the pieces of paper on a desk top may be moved around, restacked and reshuffled so that different pieces of paper are exposed, similarly the windows can be moved in the same manner on the display system. One of the fundamental principles of an object oriented user interface is "the user in control" design premise, that is, the user is in control of the system instead of the system dictating or limiting how the user interacts at any point in time. In such an object oriented system in a windowing environment, the user thus has the flexibility to interactwith any part of the system at any time by opening and using one of the plurality of windows on the display. Using the desktop analogy, the user can create an extremely messy desk and potentially hide windows by opening other windows.

The severity of the messy desk problem is effected by the type of application being run by the user. For example, an application written for an office environment may not increase the problem severely because neither the objects with which the user works nor the types of tasks the user is performing are very complex. However, in an application where the objects are typically hierarchical and very complex and the user's tasks encompass many steps would lead to an extremely severe messy desk problem.

Various attempts have been made to ease the messy desk problem. For example, U.S. Patent 4,868,765 discloses a porthole window system, which allows a user to look at a portion of a window underlying a first window which could not otherwise be seen. Other attempts at solving the messy desk problem can be found in U.S. Patents 4,819,189, 4,845,644, and 4,890,257. However, none of these has attempted to reorganize the windows according to a desired sequence. Such a reordering may be in some numerical type sequence or, in the case of an object oriented programming system, to reorder the windows according to "parent-child" relationships between objects. Such reordering of windows may be referred to as "tiling." Thus, it would be extremely advantageous to be able to tile a plurality of windows by either sequence, or according to some predetermined relationship.

Accordingly, it is an object of this invention to provide an improved user interface in a computer system.

It is another object of this invention to provide an improved computer system which enables a plurality of windows opened on a display to be reorganized in order.

In accordance with these and other objects, there is disclosed a method and apparatus for managing a multi-windowed display in a graphical user interface. At the top of all windows in a multi-windowed environment, is a title bar having a system menu icon for performing various functions. The system menu icon has a pull-down menu having one or more choices for actions. To select a particular action, a user selects the system menu icon in the title bar by clicking on it with a mouse, thereby opening up a further menu of choices of actions to be performed. According to the present invention, the system menu icon contains a menu of choices for moving one or more of the windows in a multi-window display. Such menu choices from the system menu icon could include a function to restore a window to its original size, another choice to move or shrink a window, and finally a choice to reorder the plurality of windows which are currently open in the multi-windowed environment.

The menu choice which enables the reordering of windows is identified as "Tile By". The selection of the "Tile By" menu choice leads to a further cascading menu pull-down to provide two additional choices as to how the windows may be reordered. According to the present invention, the two choices are to "Tile By Sequence" and to "Tile By Object". If the windows are tiled by sequence, the opened windows on the display are reordered according to the sequence in which they were opened. In this manner, the last opened window becomes the outer most window on the display, while the first opened window becomes the farthest back window on the display. The "Tile By Sequence" choice can be invoked from anyone of the opened windows on the display.

When the windows are tiled by object, the windows are reordered according to the inheritance property of object oriented programming systems (OOPS). Objects, such as windows in a multi-windowed display, can inherit certain characteristics from other objects. For example, if object A can inherit certain characteristics from objects B and C, then object A is a child of its parents B and C. Object A can also be a parent object, if, for example, object D can inherit characteristics from object Aand, hence also from objects B and C. In this case, object D would be the junior most child and objects Band C would be the senior most parents in this particular inheritance hierarchy. Similarly, windows in a multi-windowed environment in an OOPS can be thought of as being in a parent-child relationship with other windows, and thus exhibiting inheritance properties. According to the present invention, when the "Tile By Object" selection is made, each window in a given parent-child relationship is reordered. The senior most parent will appear as the furthest window back in the display, while the junior most child will be the top window of the display. The "Tile By Object" selection can be made from any one of the opened windows on the display.
Fig. 1 is a graphical illustration of a computer depicting a display unit, system unit, keyboard, and mouse.
Fig. 2 is a graphical representation of a computer display having a plurality of windows thereon.
Fig. 3 is a graphical representation of a computer display having a plurality of windows in a sequential order.
Fig. 4 is a graphical representation of a computer display having a plurality of windows in an object oriented programming system displayed thereon.
Fig. 5 is a graphical representation of a computer display having a plurality of windows in an object oriented programming system in an ordered hierarchical arrangement.
Fig. 6 is a graphical representation of a computer display depicting a plurality of choices for operating upon a window in a display.
Fig. 7 is a logic flowchart illustrating a method for sequentially reordering windows in a multi-windowed environment according to the present invention.
Fig. 8 is a logic flowchart illustrating a method of reordering a plurality of windows in an object oriented programming system according to the present invention.
Fig. 9 is a functional diagram of a computer system unit according to the present invention.

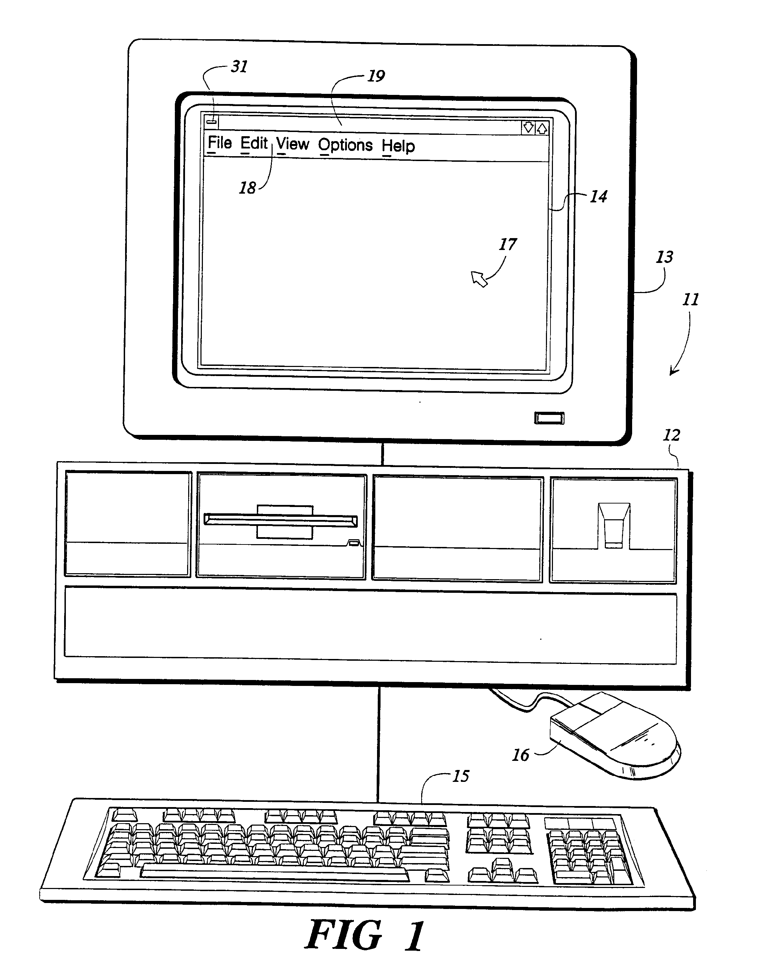

Referring now to Fig. 1, there is depicted a computer system 11. Computer system 11 may be implemented using any available personal computer and operating system, such as the IBM PS/2 Personal Computer and OS/2 operating system, manufactured by International Business Machines Corporation.

As depicted, computer system 11 includes a system unit 12 and a display unit 13 connected thereto. Depicted within display unit 13 is display screen 14, which provides a graphical representation of a computer application in a manner well known in the art. Depicted within display screen 14 is a window having an action bar or line 18 across the top, which includes the following functions: File, Edit, View, Option, Help. Also connected to system unit 12 is keyboard 15 and mouse 16. Data may be entered into the computer system 11 and actions performed using keyboard 15 or by use of mouse 16. By moving mouse 16 along a flat surface, pointer 17 may be moved to various positions on display screen 14. Any of the options shown within action bar 18 of display 14, such as File or Help, may be selected by placing pointer 17 using mouse 16 on the desired function and pushing an appropriate button on mouse 16. As is well known in the art, this selection process using mouse 16 is referred to as "clicking-on". The window of display screen 14 also includes title bar 19 having system menu icon 31.

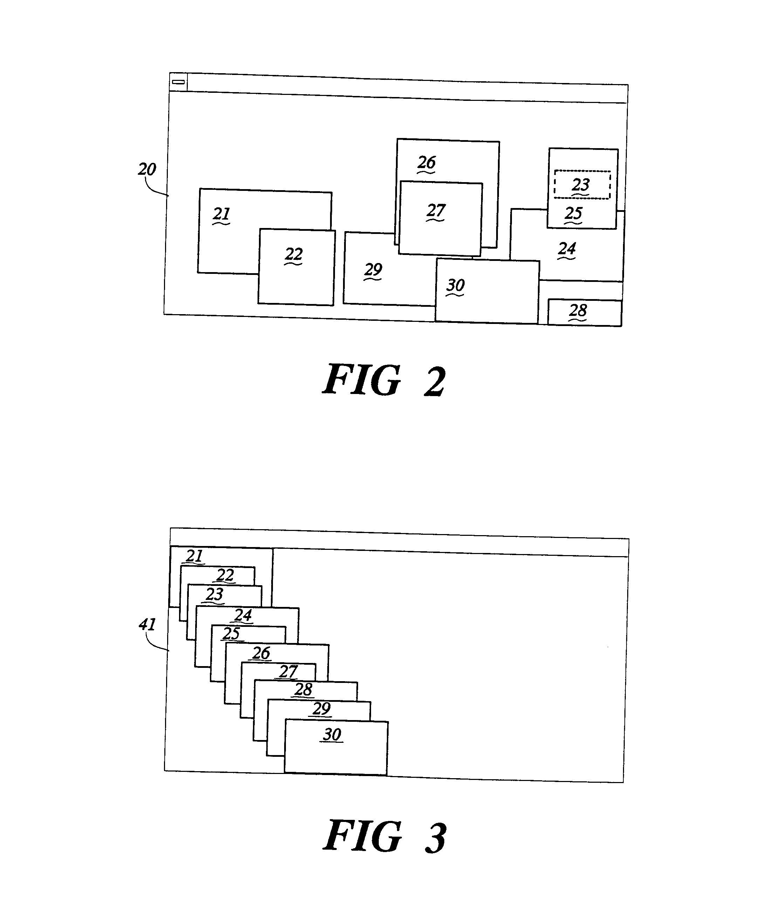

The messy desk problem, which is caused by running an application with multiple windows open on a display or running multiple applications, each with multiple windows open on a display is depicted in Fig. 2. The graphical representation of a display screen 20 includes ten open windows numbered 21 through 30. As can be seen, only windows 22, 25 and 27 are completely visible on display screen 14. The remainder of the windows are either partially or even totally obscured. Windows 28 and 30 are only partially resident on display screen 20. Window 23, as depicted in Fig. 2, is completely hidden under window 25. Although windows 21, 23, 24, 26 and 29 are completely resident on display screen 20, they are obscured by other windows on top of them. In a multi-windowed environment, only one of windows 22, 25 or 27 would be input active, i.e., capable of having data or an action input thereto.

Screen display 41 depicts windows 21 through 30, which have been reordered in a sequential order from the graphical representation that was depicted in Fig. 2. As shown, window 21 is the furthest back window in Fig. 3, while window 30 is the outermost window in Fig. 3. Note that the numerals 21 through 30 for each of the windows depicted in Figs. 2 and 3 would not be visible when normally running an application or applications in a multi-windowed environment. Atypical end user would normally not recall the order in which ten windows on a display were opened. Thus, to reorder the windows as depicted in Fig. 3, a user would have to keep some running record of the windows in the order in which they were opened and then manually, using mouse 16, rearrange them in a sequential order on display screen 41. Such a process would be quite laborious and time consuming.

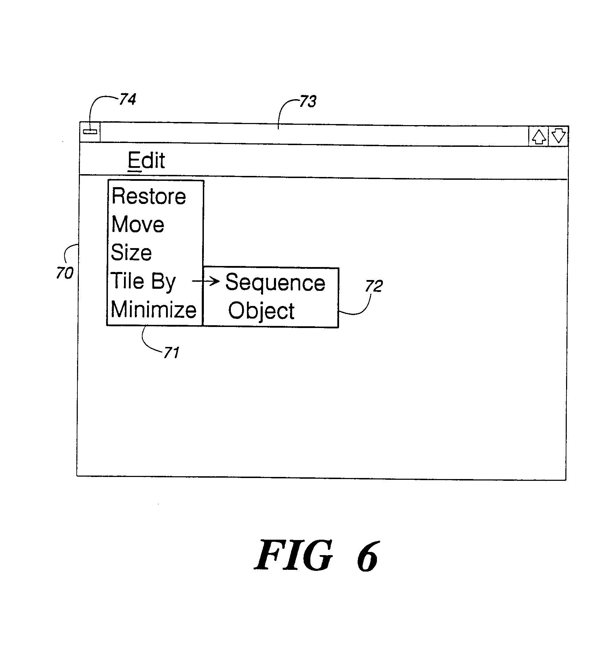

Alternatively, according to the present invention, a user could click on the system menu icon of any one of windows 21 through 30 in Fig. 2, using mouse 16. As shown in Fig. 6, if a user clicks on system menu icon 74 in title bar 73, then pop-up window 71 becomes visible. Pop-up window 71 provides five functions or actions that can be performed on any one of windows 21 through 30. As shown in Fig. 6, these actions include the functions of Restore, Move, Size, Tile By, and Minimize. If the Tile By action is selected, then pop-up window 72 appears with the actions of Sequence or Object becoming visible. In order to reorder windows 21 through 30, shown in Fig. 2, so that they would appear as shown in Fig. 3, i.e., in an ordered sequence, the Sequence action in pop-up window 72 would be selected or clicked-on.

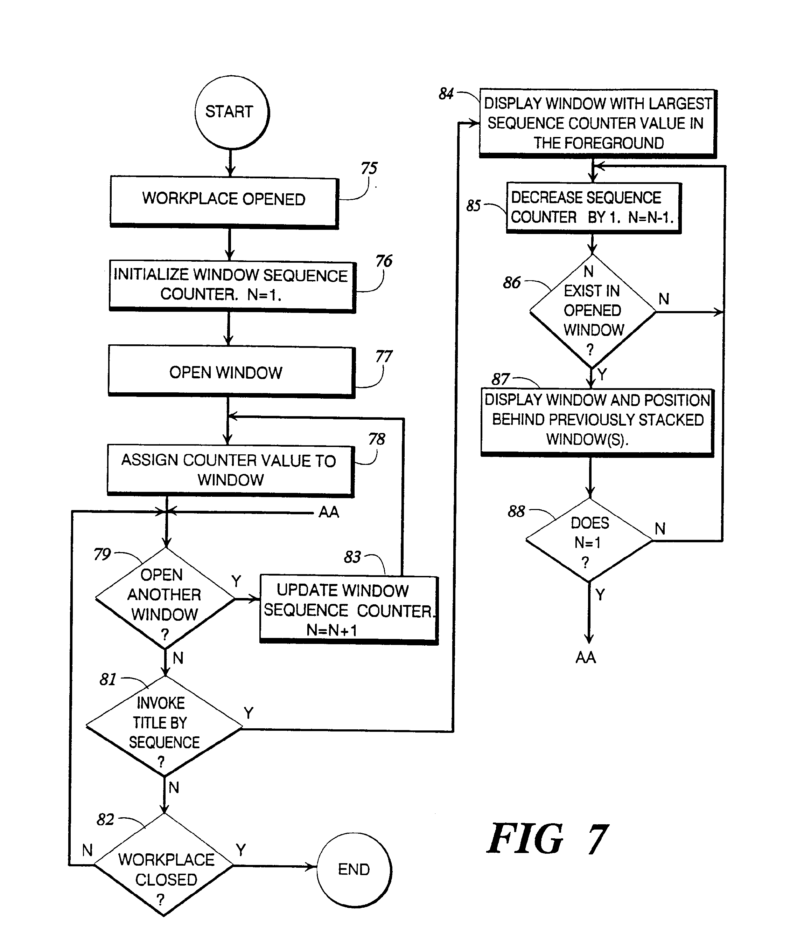

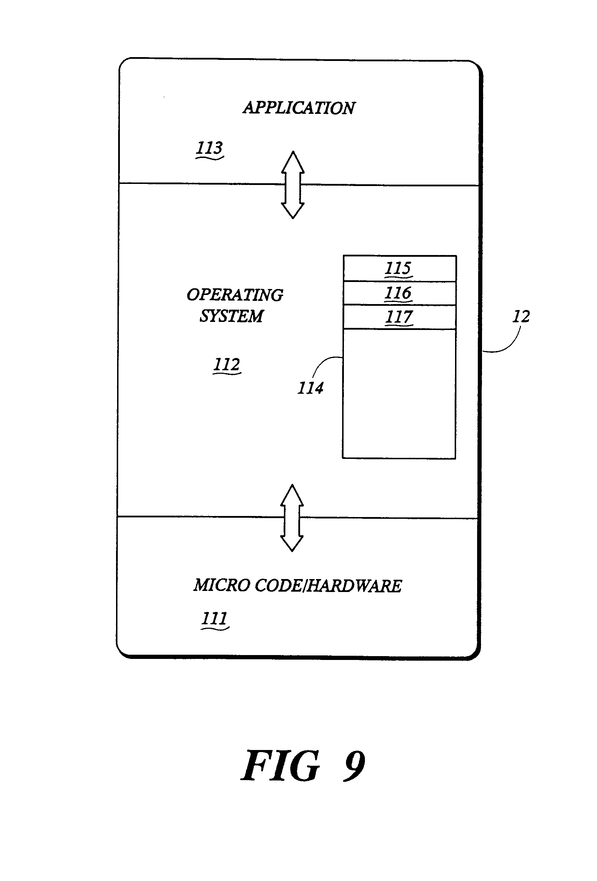

The reordering of windows 21 through 30, as shown in Fig. 3, will now be described in more detail using the flowchart of Fig. 7 and the functional diagram of Fig. 9. An application 113 having windows for entering and displaying data is first loaded into system unit 12. As seen in Fig. 9, the functional diagram representing system unit 12 also includes operating system 112 and microcode hardware 111. Note that application 113 could be a plurality of applications and not just necessarily a single one.

Operating system 112 typically includes a number of functional modules for managing various aspects of a computing system. One of these components of operating system 112 is presentation manager 114. Presentation manager 114 enables the user to control the windows in an application 113. According to the present invention, presentation manager includes window sequence counter 115, parent object counter 116, and child object counter 117. The operation and use of these counters will be explained in more detail hereinafter.

An end user then begins execution of the application program(s) and, as shown in step 75, a workplace is opened. The initial workplace may be as depicted in Fig. 1 with display screen 14. At this time, a window sequence counter 115 is initialized, as shown in step 76, and the first window is opened, as shown in step 77. According to the present invention, this would be window 21. A counter value would be then assigned to window 21 in window sequence counter 115, as shown in step 78. In decision block 79, the determination is made as to whether additional windows are to be opened. Decision block 79 is reached each time an additional window is opened. Each time an additional window, such as windows 22 through 30, are opened, a window sequence counter 115 is updated by one, as shown in step 83.

If the answer to decision block 79 is no, that is, another window subsequent to the previous window is not opened, then a decision is made in decision block 81 as towhetheror not a Tile By Sequence function has been invoked, as depicted by pop-up windows 71 and 72 in Fig. 6. If the Tile By Sequence function has not been selected using pop-up window 72, then, as shown in decision block 82, a determination is made as to whether or not the workplace, which was opened in step 75, is now to be closed. If the answer is yes the workplace is closed, then no further processing is carried out. However, if the answer is no, then a loop is made back to decision block 79, and a determination is made as to whether or not another window is to be opened.

When the Tile By Sequence function is invoked by selecting that action in pop-up window 72, the yes branch of decision block 81 is followed. In step 84, the window with the largest sequence counter value is then displayed in the foreground of screen display 41. In this case, that would be window 30. The sequence counter 115 is then decreased by one, as shown in block 85. Next, in decision block 86, a determination is made as to whether the value of the window sequence counter 115 exists in an open window. If the determination is no, then the sequence counter 115 is decreased by one and a determination is once again made as to whether or not the window sequence counter 115, having a value of n, exists in an open window. When the answer to this question is yes, then, as shown in step 87, the displayed window is positioned behind a previously stacked window. In this example, window 29 would then be positioned behind window 30 as shown in Fig. 3. Steps 85, 86 and 87 would continue until windows 21 through 30 are stacked in the order in which they appear on display screen 14. The final step 88 is reached when the windows 21 through 30 appear as they do in Fig. 3 on display screen 14. At this point, the logic flow loops back to decision block 79 where a determination is made as to whether another window has been opened.

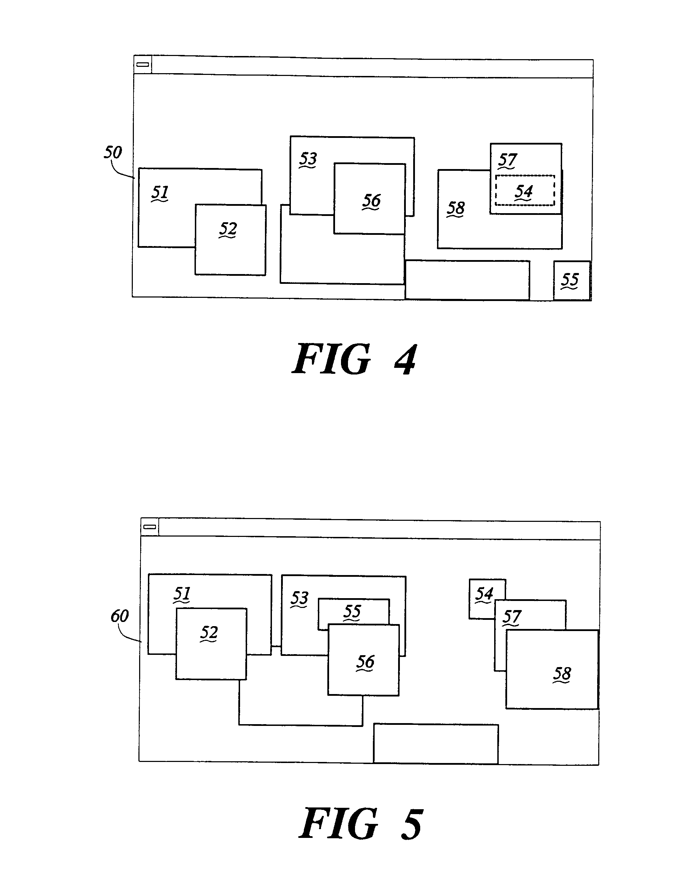

Fig. 4 is a graphical representation of a display screen 50 in an object oriented programming system having windows 51 through 58. In an object oriented programming system, according to the present invention, each of windows 51 through 58 may be referred to as objects in the display screen 50. Since this is an object oriented programming system, the objects or windows 51 through 58 display the inheritance property of such systems wherein two or more windows are in what is known as a parent-child relationship with one another. In the example of display screen 50, windows 51 and 52 are in such a relationship, as are windows 53, 55 and 56, as well as windows 54,57 and 58. Note that as for the example previously described for sequentially ordered windows, some of the windows shown in Fig. 4 are either partially or totally obscured by others of the windows. Specifically, window 54 is totally obscured by windows 57 and 58, while window 51 is partially obscured by window 52, and window 53 is partially obscured by window 56. As can be seen with respect to display screen 50, an end user can easily become confused as to which object in a parent-child relationship is the parent, and which one or more other objects are children of such parent. Consequently, it would be quite difficult for an end user to reorder windows 51 through 58 according to some parent-child relationship.

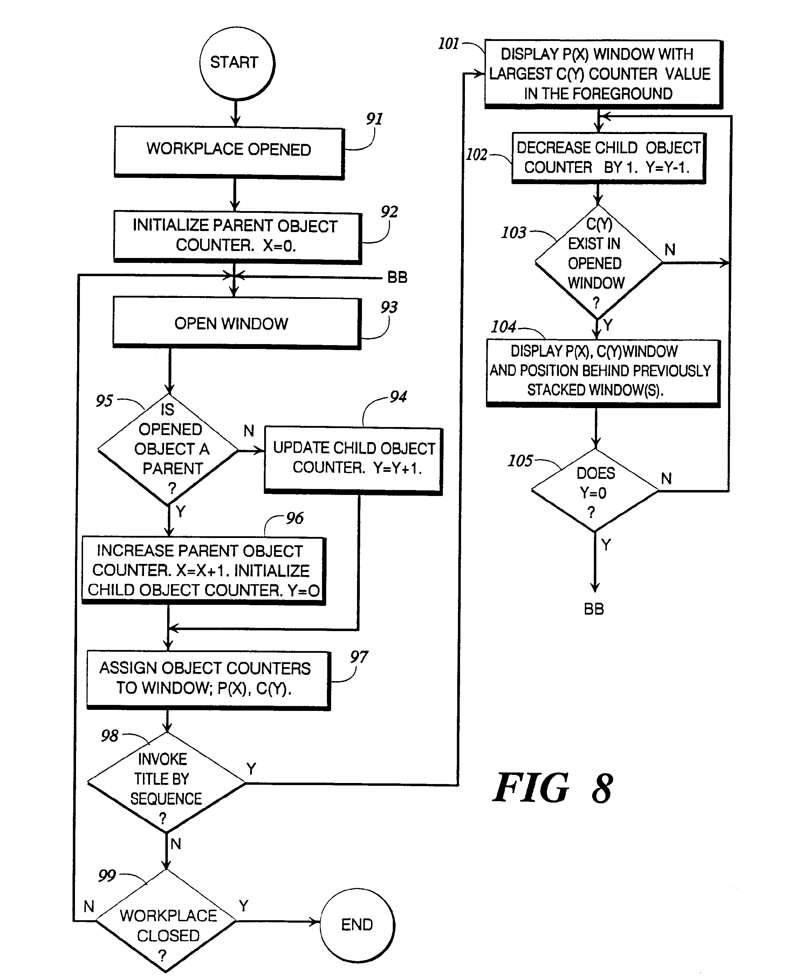

The reordering of windows 51 through 58 according to their parent-child relationship, as depicted in display screen 60, will now be described in more detail with respect to Fig. 6 and the flowchart in Fig. 8. For purposes of the following example, the Tile By Object reordering will be demonstrated with respect to windows 53, 55 and 56, which are in a parent-child hierarchy. It should be noted that this could also be done for windows 51 and 52, which form a hierarchical relationship as well as windows 54, 57 and 58, which also form a hierarchical arrangement.

Once again, an end user would load an application 113 on system unit 12, thereby opening a window such as display screen 14 on display unit 13. Referring to Fig. 8, this would be indicated as step 91, workplace opened. In step 92, a parent object counter 116 would be initialized and then, in step 93, a first window would be opened. In decision block 95, a determination is made as to whether the window opened in step 93 is a parent window or not, i.e., a child window. If the window opened in step 93 is not a parent window, then, as shown in step 94, a child object counter 117 is updated by one and a loop is then made to step 97. However, if the window opened in step 93 is a parent, then the parent object counter 96 is incremented by one and the child object counter 117 is initialized to 0. In step 97, object counters are assigned to each opened parent and child window for subsequent processing. In decision block 98, a determination is then made as to whether or not the Tile By Object action shown in pop-up window 72 has been made. If the Tile By Object action is not selected, then a determination is made in decision block 99 as to whether or not the workplace is closed. If the answer is yes, then the session terminates. If the answer is no, then the system moves back to step 93 awaiting the next window to be opened.

If the determination in decision block 98 that the Tile By Object action 72 has been invoked, then according to step 101, the parent window having the largest counter value for a child object is displayed in the foreground. Next, in step 102, the associated child object counter is decreased by one. In decision block 103, a determination is made as to whether or not a counter having the decreased value found in step 102 exists in an open window. If the determination is no, then the system loops back to step 102 where the child object counter 117 is decreased by one. However, when the answer is yes, then, as shown in step 104, the parent window having a child whose counter value is the largest would be displayed with the child in the immediate foreground, and both parent and child would be behind any previously stacked windows. In this case, windows 53, 55 and 56 would be displayed as shown in Fig. 5. This process would continue in decision block 105 until the value of the child counter 117 has been decremented to zero. At this point, the system logic would loop back to step 93.

## Claims

1. A multiple window display apparatus, including a display unit having a display screen for displaying a plurality of windows thereon, comprising:
means for opening a plurality of windows;
means for displaying each of said plurality of opened windows on said display screen; and, means for placing said plurality of opened windows in an ordered arrangement according to a predetermined criterion.

2. The apparatus according to claim 1 further comprising means for displaying said ordered arrangement of opened windows.

3. The apparatus according to Claim 1, wherein said placing means further comprises a window sequence counter for assigning a value to each opened window, the value assigned to each opened window being incrementally higher than the value assigned to each immediately preceding opened window.

4. The apparatus according to Claim 3 further comprising means for displaying each of said plurality of opened windows immediately behind an opened window having the next highest window sequence counter value.

5. The apparatus according to Claim 3 further comprising means for displaying an opened window having the highest window sequence counterval- ue as the outer most window on said display screen.

6. The apparatus according to Claim 5 further comprising means for displaying an opened window having the second highest window sequence counter value immediately behind the outer most window on said display screen.

7. The apparatus according to Claim 6 further comprising means for displaying each remaining one of said plurality of opened windows immediately behind an opened window having the next highest window sequence counter value.

8. The apparatus according to Claim 1 further comprising means for selecting said predetermined criterion from a list of selectable criteria.

9. The apparatus according to Claim 8 wherein said selection means is available in each of said plurality of opened windows on said display screen.

10. A method for displaying a plurality of window objects which are in a hierarchical relationship to one another in a multiple window display apparatus having a display unit with a display screen, said method comprising the steps of:
opening a plurality of window objects;
displaying each of said plurality of opened window objects on said display screen; and,
placing said plurality of opened window objects in an ordered arrangement according to a predetermined criterion.

11. The method according to Claim 10 further including the step of:
displaying said ordered arrangement of opened window objects.
